# EUROPEAN PATENT SPECIFICATION

(11) **EP 3 802 304 B1**
(45) Date of publication and mention of the grant of the patent: **29.01.2025**
(21) Application number: 19730731.7
(22) Date of filing: 07.06.2019
(51) Int. Cl.: B62M 27/02, B62D 11/04, B62D 63/02, B62D 11/00, B62D 61/00, B62D 55/06, B62D 55/084

(54) **A MOTORIZED SNOW OR ICE VEHICLE**
MOTORISIERTES SCHNEE- ODER EISFAHRZEUG
VÉHICULE POUR NEIGE OU GLACE MOTORISÉ

(30) Priority: 10.06.2018 AT 600832018
(43) Date of publication of application: 14.04.2021
(73) Proprietor: Bobsla GmbH, 6112 Wattens (AT)
(72) Inventor: SHCHTETININ, Vladimir, Moscow, 125252 (RU); IGNATYEV, Sergey, 6166 Medraz (AT)
(74) Representative: Schwarz & Partner Patentanwälte GmbH
(86) International application number: PCT/EP2019/065019
(87) International publication number: WO 2019/238579

(56) References cited:
- CN-Y- 201 165 242
- DE-A1- 2 257 233
- JP-A- 2007 182 137
- US-A- 1 682 051
- US-A- 1 916 375
- US-A- 2 683 608
- US-A- 2 967 578
- US-A- 3 698 500
- US-A1- 2018 043 932

## Description

The present invention relates to a motorized snow or ice vehicle, comprising a body, a sliding surface at the bottom of said body, a first wheel or endless track at one side of the vehicle and a second wheel or endless track at the opposite side of the vehicle, both attached to the outside of the body, and a seat.

### Background of the invention

Conventional tractors, caterpillars and similar machines are equipped with two endless tracks, whose independent motion is used for propelling as well as for steering the vehicle. All the weight of the tractor or similar vehicles is distributed on its tracks, which should have good traction for motion, braking and steering. A disadvantage of such a construction is that the tracks should have a certain size to have a large enough contact surface to not be stacked into non-solid surfaces.

Moreover, conventional snowmobiles are motorized vehicles that can on the one hand slide on smooth surfaces and on the other hand are propelled by endless tracks or wheels. More precisely, a snowmobile is propelled by one track and comprises one or two front skies, which are used to steer the snowmobile. The weight of this vehicle is distributed among the surface of the endless track and the surface of the steering skies. The skies are designed to have a smooth gliding surface, which is constantly in contact with the snow, allowing the vehicle to float on the snow. A substantial proportion of the vehicle weight should be distributed on the steering skies, such that the vehicle can be steered. Therefore, the skies of the vehicle are often broken by hitting any obstacle like stones or trees, which are often covered by snow.

Furthermore, these snowmobiles cannot slide freely on snow or other slippery surfaces without the endless track touching the surface, as the surface of the skies is not big enough to carry the whole weight of the vehicle. Thus, for those snowmobiles the endless tracks or wheels have to be in constant contact with the surface on which the vehicle is moving.

There are also other vehicles which comprise endless tracks and a sliding surface, like the vehicle disclosed in US 1,916,375 A. The endless tracks of this vehicle, in particular this sled, are vertically and independently swingable in order to enable more traction of the endless tracks to the ground when driving on non-solid surfaces. The sliding surface of the vehicle in US 1,916,375 A is comprised by a pair of runners with metal plates as used for sleds. Vehicles like this one are driven by combustion engines, which make it necessary to use complex gear systems that transfer the motor power into the endless tracks. Moreover, controlling the endless tracks independently is more difficult in this case.

US 2 967 578 A discloses a motorized snow or ice vehicle according to the preamble of claim 1.

### Short description of the invention

Hence, one object of the present invention is to provide a snow or ice vehicle that does not suffer from these drawbacks.

Furthermore, the object of the present invention is to provide a vehicle which is able to slide on slippery surfaces like snow or ice and at the same time can be driven by wheels or endless tracks powered by a motor.

This object is solved by a motorized snow or ice vehicle as defined in claim 1.

Such a motorized vehicle according to the invention comprises a body, a sliding surface at the bottom of said body, a first wheel or endless track at one side of the vehicle and a second wheel or endless track at the opposite side of the vehicle, both attached to the outside of the body, and a seat, characterized by a first motor attached to one side of the body and a second motor attached to the opposite side of the body, wherein the first motor is in drive connection with the first wheel or endless track and the second motor is in drive connection with the second wheel or endless track, wherein the vehicle further comprises a first accelerator control for the first motor and a second control for the second motor, wherein first accelerator control and second accelerator control are working independently of each other.

In contrast to the tractors mentioned above a vehicle according to the invention is able to slide on smooth surfaces with the sliding surface. Vehicles according to the invention can move on slippery surfaces due to motor power as well as by sliding under the influence of gravity or inertia forces. The vehicle may comprise a body, a sliding surface at the bottom, at least one first wheel or endless track at one side of the vehicle and at least one second wheel or endless track at the opposite side of the vehicle, both attached to the outside of the body, a first motor arranged inside the first wheel or endless track and a second motor arranged inside the second wheel or endless track, a seat and at least two control levers. Moreover, these wheels or endless tracks at the same time propel, steer and brake the vehicle.

The independent motion of the first and second wheel or endless track thus allows the vehicle to be steered by the wheels or endless track. They can be independently propelled due to the existence of separate motors for the first and second wheel or endless track.

Moreover, the at least one seat of the vehicle is mounted between the first wheel or endless track and the second wheel or endless track. The seat may be attached to the inner bottom of the body of the vehicle.

This setup allows lowering the center of gravity leading to enhanced sliding and driving properties. The seat may be also equipped with a seat belt to ensure safety. The backrest may be high enough to protect the back of the person driving the vehicle while turning.

In a preferred embodiment the first and second motor are electric motors, wherein the electric motors are powered by at least one battery. The battery is located at the bottom of the vehicle, preferably underneath the seat of the vehicle. As mentioned above this allows lowering the center of gravity and enhancing the sliding properties of the vehicle.

The state-of-the-art batteries for electric motors enable the inventive vehicle to drive for long times without recharging the batteries.

Furthermore, the at least one battery gets charged by recuperation, when the first and/or second wheel or endless track are used for braking the vehicle. As mentioned at the beginning the vehicle according to the invention is at the same time propelled, steered and braked by the wheels or endless tracks.

More precisely, the first and second wheel or endless track are controlled by the first and second motor and the wheels or endless tracks may be also used for braking.

According to the invention, the wheels or endless tracks are attached to the outside of the body at the rear of the vehicle. This allows a large part of the sliding surface to slide on slippery grounds like snow and also prevents the sliding surface from getting damaged by hidden obstacles.

In a certain embodiment the inventive vehicle comprises a suspension system for the wheels or endless tracks. The suspension system allows for a vertical motion of the wheels or the endless tracks.

In another embodiment the first and second wheel or endless track at each side of the vehicle can be raised or lowered independently of each other. Then, the whole sliding surface of the vehicle is in contact with the ground when the first and second wheel or endless track are raised off the ground. Thus, in this setup the inventive vehicle may be used as a conventional bobsleigh. With the whole sliding surface touching the ground braking the vehicle is possible by lowering the wheels or endless tracks and steering is possible by lowering only the first or the second wheel or endless track up to a certain point.

Depending on the embodiment the wheels or endless tracks may be on the one hand lowered or raised mechanically, preferably via mechanical wheel suspension with the help of a control lever. One the other hand the wheels or endless tracks may be lowered or raised electrically with an electric wheel suspension. In both cases the wheels or endless tracks may be vertically moved by some lever mechanism. The control levers may be attached to the body in front of the seat and include the acceleration controls at their ends.

The acceleration control may be in the form of a throttle or a joystick. The throttle may propel the wheels or endless tracks by being pressed and thus, accelerate the inventive vehicle. Moreover, the control levers may comprise a brake handle, which allows to brake the wheels or endless tracks. For steering either only one of the control levers may be moved in the direction of the driver, which results in raising the wheels or endless tracks off the ground or the throttle may be pressed. In the latter case the first and second wheel or endless track are accelerated differently, resulting in the steering of the vehicle.

In certain embodiments at least one joystick is included in the control levers, which may be moved along an axis, wherein by moving it in one direction of the axis the corresponding motor and thus the wheel or endless track that is in drive connection with this motor gets propelled and by moving it in the other direction the wheel or endless track is braked.

In another preferred embodiment of the inventive vehicle at least half of the sliding surface touches the surface on which the vehicle is moving when the wheels or endless tracks are lowered. Moreover, the sliding surface may be curved upwards at the front of the vehicle. This makes the sliding surface resistant against obstacles on the ground by decreasing the hitting strength.

Another disclosed embodiment comprises a computer-controller, which controls the at least one battery of the electro motors and measures the battery charge and the distance of the vehicle to the next battery charging station. Furthermore, the computer-controller preferably contains GPS-coordinates. The computer-controller may also be used to control the accelerator control, especially in the case when only a single joystick is used for both motors. Then, the motion of the joystick may be interpreted by the computer-controller as a signal to either propel or brake one or two of the motors, respectively.

### Detailed description and preferred embodiments

The foregoing and other objects, features, and advantages of the invention will become more apparent from the following detailed description, which proceeds with reference to the accompanying figures.
Fig. 1 shows a side view of the inventive vehicle with two wheels.
Fig. 2 provides a bottom view of the inventive vehicle with two wheels and a large sliding surface.
Fig. 3 shows a side view of the inventive vehicle with endless tracks.
Fig. 4 shows a side view of the inventive vehicle including the seat and the computerized battery of the electro motor.
Fig. 5 shows a back view of the inventive vehicle with the endless tracks in different vertical positions.
Fig. 6 depicts a side view of the rear of the inventive vehicle with mechanical levers which may raise and lower the endless tracks.
Fig. 7 depicts a side view of the rear of the inventive vehicle with an electrical mechanism that allows to raise and lower the endless tracks.
Fig. 8 provides a side view of the inventive vehicle including endless tracks that can be lowered into non-solid surfaces at different angles.

The present invention, which is defined by claim 1, relates to a vehicle, in particular a sled, which is able to slide on a slippery surface like for example snow, ice or sand and which may be driven by a motor. More precisely, the inventive vehicle comprises wheels or endless tracks, which are preferably electric-motor powered.

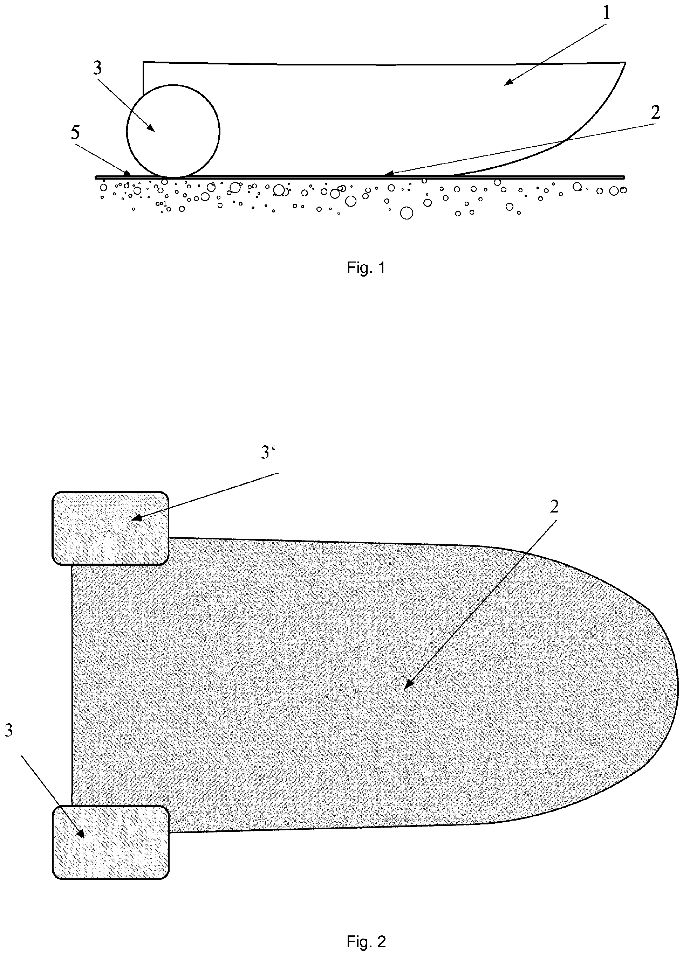

Fig. 1 shows a side view of a vehicle comprising a body 1, a sliding surface at the bottom 2 of said body 1, a first wheel 3 at the depicted side of the vehicle, wherein the second wheel 3' at the opposite side of the vehicle cannot be seen in Fig. 1. Both wheels 3, 3' are attached to the outside of the body 1. Furthermore, an example of a slippery surface 5 on which the vehicle is driving or sliding is depicted. The first and second motor of the snow or ice vehicle cannot be seen in Fig. 1, as they are arranged inside the first and second wheel 3, 3' respectively.

In Fig. 2 the bottom view of the vehicle shows the huge sliding surface 2, which is at the bottom of the body 1 and formed by said body 1 and the first and second wheel 3, 3', both attached to the outside of the body 1.

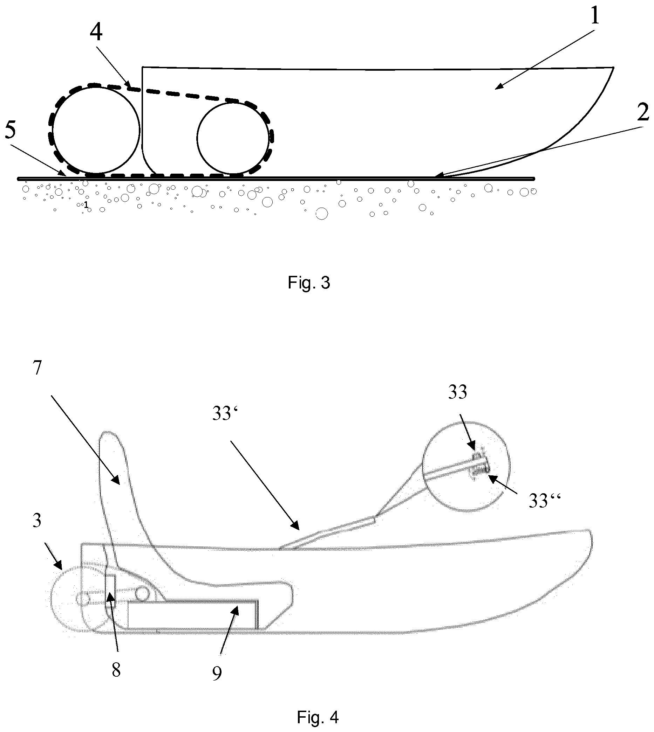

Fig. 3 depicts another embodiment of the vehicle including a first endless track 4 instead of the first wheel 3 at the side of the vehicle, which is depicted in this figure. On the opposite side of the vehicle a second endless track 4' is arranged (not seen in Fig. 3).

As can be seen in Fig. 4 in another side view of the inventive snow or ice vehicle a seat 7 is preferably mounted between the first wheel 3 (or endless track 4) and the second wheel 3' (or endless track 4'). Moreover, the seat 7 may be attached to the inner bottom of the body 1, such that it is on almost the same level as the wheels 3, 3' or endless tracks 4, 4' close to the ground.

In a preferred embodiment the first and second motor are electric motors, wherein the electric motors are powered by at least one battery 9, which is preferably located underneath the seat 7 of the vehicle as depicted in Fig. 4. Next to the battery may be a computer-controller 8, which controls the at least one battery 9 of the electro motors and measures the battery charge and the distance of the vehicle to the next battery charging station.

In all figures the snow and ice vehicles depicted are driven by electric motors, which as stated above are arranged inside the wheels 3, 3' or endless tracks 4, 4'.

As can be seen in the figures wheels 3, 3' or endless tracks 4, 4' are according to the invention attached to the outside of body 6 at the rear of the vehicle.

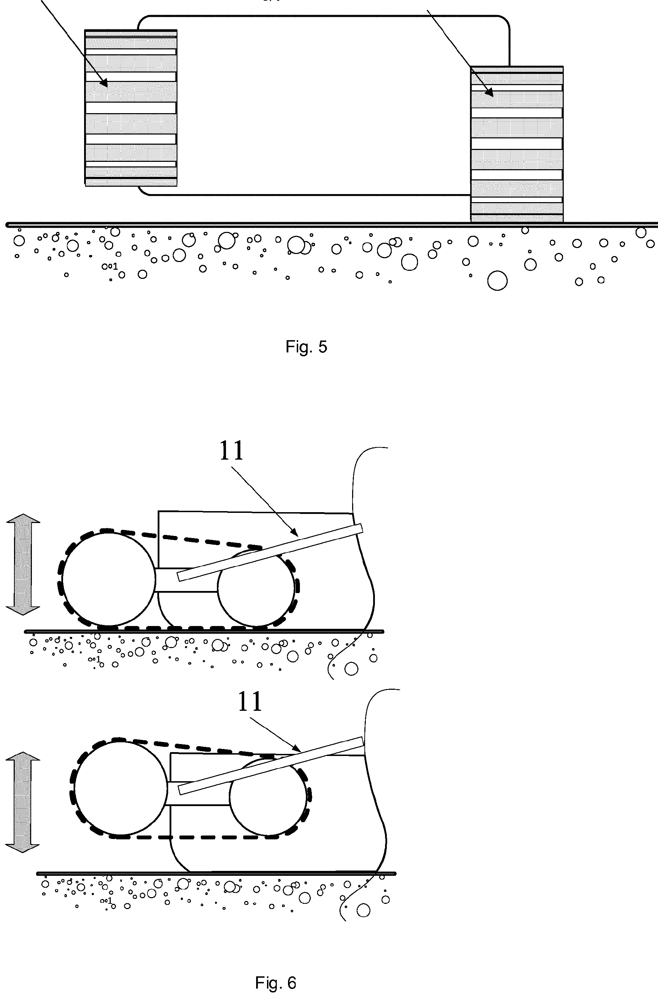

Furthermore, certain embodiments of the inventive vehicle allow for the first and second wheel 3, 3' or endless track 4, 4' at each side of the vehicle to be raised or lowered independently of each other. Fig. 5 shows exemplarily a different vertical position of the first and second endless track 4, 4'.

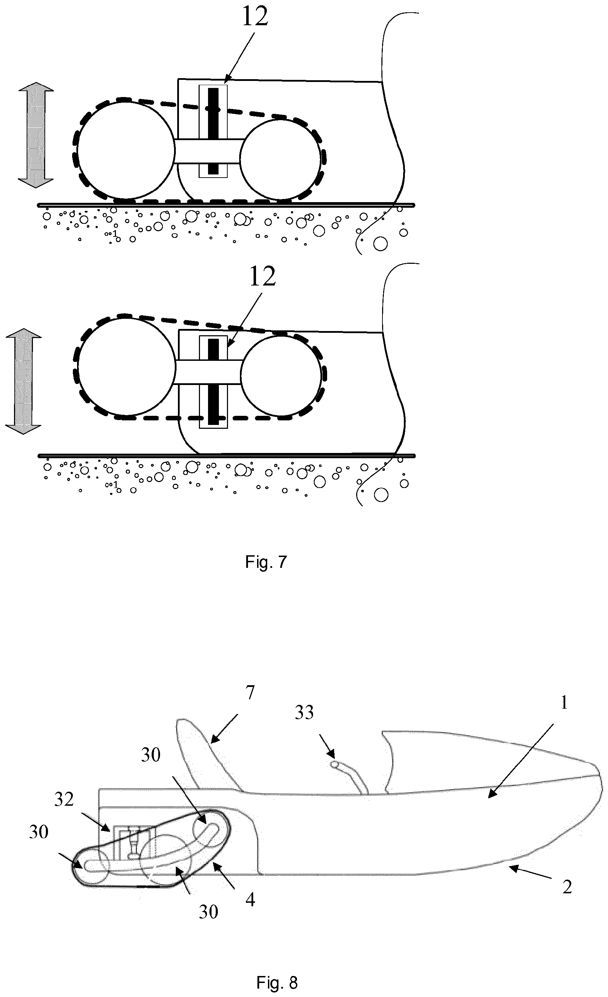

In case the first and second wheel 3, 3' or endless track 4, 4' are raised off the ground, the whole sliding surface 2 of the vehicle is in contact with the ground, as shown for example in Fig. 6 and Fig. 7.

Fig. 6 also shows a mechanical wheel suspension 11, which can raise and lower the wheels 3, 3' or endless tracks 4, 4' mechanically with control levers 33'. Another possibility to raise and lower the wheels 3, 3' or endless tracks 4, 4' is shown in Fig. 7, where an electrical wheel suspension 12 is depicted, which is again actuated by control levers 33'.

Fig. 8 depicts the first accelerator control 33 in another side view of a certain embodiment of the inventive snow and ice vehicle. The first and second accelerator control 33 are attached to the body 6 in front of the seat 7. In this figure a suspension system 32 attached to the wheels or endless tracks 3, 3'; 4, 4' is shown, which allows for a vertical motion of the wheels or the endless tracks 3, 3'; 4, 4'. Fig. 8 also shows an embodiment of the endless track 4 with three drive wheels 30.

In the side views of the inventive vehicle as depicted in some of the figures it can also be seen that the sliding surface 2 is curved upwards at the front of the vehicle.

Moreover, the figures show that at least half of the sliding surface 2 touches the surface on which the vehicle is moving when the wheels 3, 3' or endless tracks 4, 4' are lowered. Thus, the weight of the vehicle and the potential driver is distributed among the part of the sliding surface 2 touching the ground and the wheels 3, 3' or endless tracks 4, 4'.

The inventive snow or ice vehicle, in particular but not limited to a snow bob, thus comprises a first and second wheel 3, 3' or endless track 4, 4', which can be independently of each other propelled by power of a first and second motor, respectively. In a preferred embodiment the first and second motor are electro motors, which may therefore be attached to the wheels 3, 3' or endless tracks 4, 4'. This allows to transfer the motor power directly into the wheels 3, 3' or endless tracks 4, 4' without using some complex and less efficient gear systems. The electric motors are powered by at least one battery 9, which is controlled by a computer-controller 8.

The computer-controller 8 measures the battery charge and the distance of the vehicle to the next battery charging station. Furthermore, it may contain GPS-coordinates, which allow to locate the vehicle and thus, prevent the driver from going into danger zones like steep mountains and can also be used when a person rents the vehicle or when it is used by kids.

The independent drive connections of the first and second motor with the first and second wheel 3, 3' or endless track 4, 4' enables the motors do not only propel the vehicle but also steer the vehicle. More precisely, the vehicle is steered by differential steering, meaning that the first and second motor are driven at different speeds. On top of that the vehicle can also be steered by raising one of the wheels 3, 3' or endless tracks 4, 4'.

A first accelerator control 33 for the first motor and a second accelerator control 33 for the second motor, which work independently, allow the driver to steer and propel the vehicle at the same time. The accelerator controls 33 may be part of control levers 33' and are mounted in front of the seat 7. Moreover, there may be a brake lever 33" next to the accelerator controls 33 to brake the vehicle. Depending on the embodiment the accelerator control 33 may either be a throttle or a joystick. In the first case the throttles are fixed on the control levers 33' and pressing them changes the speed of the motor. In the second case there can be either a joystick for each of the control levers 33', which change the speed of the motors by moving them along an axis, where in one direction the vehicle is propelled and in the other direction it is braking the vehicle, or there may be only one joystick for both motors that connects to the computer-controllers 8 of both motors. Then, the motion of this single joystick may be interpreted by the controllers 8 as a signal to drive one or both of the motors or to brake one or both of the motors.

As the wheels 3, 3 ' or endless tracks 4, 4' may be moved vertically via a mechanical or electrical wheel suspension 11, 12 and even raised off the ground, the inventive vehicle can move on a slippery surface 5, like for example snow, ice, moss, wooden chips and similar, on the one hand due to motor power and on the other hand by sliding freely on such a surface 5 under the influence of gravity or inertia forces. In the latter case no motor power at all is needed for driving the snow or ice vehicle and the whole sliding surface 2, which extends over the whole bottom of the body 1, is touching the ground. The driver may move the wheels 3, 3' or endless tracks 4, 4' in vertical direction with the help of control levers 33'.

The round shape of the sliding surface 2, which may also be curved upwards at the front of the vehicle helps to protect the vehicle from obstacles. Especially when the obstacles are covered by snow they cannot be seen and the driver of the vehicle may not pass the obstacles without hitting them. However, the round shape of the sliding surface 2 decreases the strength of the collision with the obstacle and thus, the body 1 of the vehicle is not destroyed.

The vertical movement of the wheels 3, 3' or endless tracks 4, 4' can be implemented by mechanical levers as well as by other mechanisms, including also electric motors or other mechanical ways.

Another advantage of the inventive vehicle is that when the vehicle is sliding under the influence of gravity, for example when the vehicle is sliding down a hill, the battery 9 of the electric motor gets charged via recuperation from the wheels 3, 3' or endless tracks 4, 4' by braking the vehicle. For braking the vehicle at least one of the wheels 3, 3' or endless tracks 4, 4' has to be lowered to the surface, such that it touches the ground.

Moreover, the endless tracks 4, 4' may be lowered into non-solid surfaces with a different angle between the surface of the endless track and the surface on which the vehicle is moving 5. This helps to increase the grip of the endless tracks with such non-solid surfaces.

The vertical movement of the wheels 3, 3' or endless tracks 4, 4' via the mechanical or electrical wheel suspension 11, 12 also enables the ice or snow vehicle to free itself in case it gets stucked in a hole or similar in the ground. Whenever a wheel or endless track is stucked in the ground, the wheel suspension system allows to raise the wheel or endless track off the ground, such that the vehicle can move forward again, without the need of digging out the wheels or endless tracks.

Summarizing, the sliding surface 2 of the vehicle allows the vehicle to slide on non-solid-surface, such as snow, while the wheels 3, 3' or endless tracks 4, 4' , controlled independently of each other and located on opposite sides of the vehicle, not only set in motion or brake the vehicle, but also provide the ability to turn the vehicle along the axis of motion. The vehicle's wheels 3, 3' or endless tracks 4, 4' can be lifted over the surface, fully or partly, together or independently of each other, to allow the vehicle to slide over a surface by inertia or gravity without motor power and without the friction of the wheels 3, 3' or endless tracks 4, 4'. Thus, the vehicle can on the one hand slide down a hill like a bob and on the other hand go uphill like a snowmobile. Being lowered on the surface the wheels 3, 3' or endless tracks 4, 4' may transform the vehicle, which moved just by inertia or gravity, into a vehicle, which motion is controlled by independently accelerating or by braking the wheels 3, 3' or endless tracks 4, 4'.

## Claims

1. A motorized snow or ice vehicle comprising
• a body (1),
• a sliding surface at the bottom (2) of said body (1),
• a first wheel (3) or endless track (4) at one side of the vehicle and a second wheel (3') or endless track (4') at the opposite side of the vehicle, both attached to the outside of the body (1), and
• a seat (7),
wherein
a first motor is attached to one side of the body (1) and a second motor is attached to the opposite side of the body (1), wherein the first motor is in drive connection with the first wheel (3) or endless track (4) and the second motor is in drive connection with the second wheel (3') or endless track (4'),
wherein the vehicle further comprises a first accelerator control (33) for the first motor and a second accelerator control (33) for the second motor, wherein first accelerator control (33) and second accelerator control (33) are working independently of each other, **characterized in that** the wheels (3, 3') or endless tracks (4, 4') are attached to the body (1) at the rear of the vehicle and wherein the sliding surface at the bottom (2) of the body (1) is in the front of the vehicle, wherein the whole sliding surface (2) of the vehicle is at the bottom (2) of said body (1) and formed by said body (1) such that the sliding surface (2) is always touching the ground.

2. Vehicle according to claim 1, **characterized in that** the seat (7) is mounted between the first wheel (3) or endless track (4) and the second wheel (3') or endless track (4'), wherein the seat (7) is preferably attached to the inner bottom of the body (1).

3. Vehicle according to claim 1 or claim 2, wherein the first motor and the second motor are attached to the bottom of the body (1) at the rear half of the vehicle.

4. Vehicle according to one of claims 1 to 3, wherein the first motor and second motor are electric motors, wherein the electric motors are powered by at least one battery (9), which is located at the bottom, preferably underneath the seat (7), of the vehicle, wherein the first and second electric motor are arranged in the first and second wheel (3, 3') or in the first and second endless track (4, 4'), respectively.

5. Vehicle according to claim 4, wherein the at least one battery (9) is chargeable via recuperation from the first wheel (3) or endless track (4) and/or the second wheel (3') or endless track (4') by braking the vehicle.

6. Vehicle according to one of claims 1 to 5, **characterized by** a suspension system (32) for the wheels or endless tracks (3, 3'; 4, 4'), wherein the suspension system (32) allows for a vertical motion of the wheels or the endless tracks (3, 3'; 4, 4').

7. Vehicle according to one of claims 1 to 6, wherein the first wheel (3) or endless track (4) and the second wheel (3') or endless track (4') at each side of the vehicle can be raised or lowered independently of each other, wherein the whole sliding surface (2) of the vehicle is in contact with the ground when the first and second wheel (3, 3') or endless track (4, 4') are raised off the ground.

8. Vehicle according to claim 7, wherein the first wheel (3) or endless track (4) and the second wheel (3') or endless track (4') at each side of the vehicle can be raised or lowered mechanically, preferably via a mechanical wheel suspension (11), with control levers (33').

9. Vehicle according to claim 7, wherein the first wheel (3) or endless track (4) and the second wheel (3') or endless track (4') at each side of the vehicle can be raised or lowered electrically via a wheel suspension (12), with control levers (33').

10. Vehicle according to one of claims 1 to 9, **characterized in that** at least half of the sliding surface (2) touches the surface on which the vehicle is moving when the wheels (3, 3') or endless tracks (4, 4') are lowered.

11. Vehicle according to one of claims 1 to 10, wherein the sliding surface (2) is curved upwards at the front of the vehicle.

12. Vehicle according to one of claims 1 to 11, **characterized by** a computer-controller (8), wherein the computer-controller (8) controls the at least one battery (9) of the electro motors and measures the battery charge and the distance of the vehicle to the next battery charging station, wherein the computer-controller (8) preferably contains GPS-coordinates.

## Patentansprüche

1. Ein motorisiertes Schnee- oder Eisfahrzeug, umfassend
• einen Körper (1),
• eine Gleitfläche an der Unterseite (2) des Körpers (1),
• ein erstes Rad (3) oder eine Raupenkette (4) an einer Seite des Fahrzeugs und ein zweites Rad (3') oder eine Raupenkette (4') an der gegenüberliegenden Seite des Fahrzeugs, die beide an der Außenseite des Körpers (1) befestigt sind, und
• einen Sitz (7),
wobei
ein erster Motor an einer Seite des Körpers (1) und ein zweiter Motor an der gegenüberliegenden Seite des Körpers (1) angebracht ist, wobei der erste Motor in Antriebsverbindung mit dem ersten Rad (3) oder der ersten Raupenkette (4) und der zweite Motor in Antriebsverbindung mit dem zweiten Rad (3') oder der zweiten Raupenkette (4') steht,
wobei das Fahrzeug ferner eine erste Beschleunigungssteuerung (33) für den ersten Motor und eine zweite Beschleunigungssteuerung (33) für den zweiten Motor umfasst, wobei die erste Beschleunigungssteuerung (33) und die zweite Beschleunigungssteuerung (33) unabhängig voneinander arbeiten, **dadurch gekennzeichnet, dass** die Räder (3, 3') oder Raupenketten (4, 4') am Körper (1) an der Rückseite des Fahrzeugs angebracht sind und wobei die Gleitfläche an der Unterseite (2) des Körpers (1) sich an der Vorderseite des Fahrzeugs befindet, wobei sich die gesamte Gleitfläche (2) des Fahrzeugs an der Unterseite (2) der Karosserie (1) befindet und durch die Karosserie (1) so gebildet wird, dass die Gleitfläche (2) stets den Boden berührt.

2. Fahrzeug nach Anspruch 1, **dadurch gekennzeichnet, dass** der Sitz (7) zwischen dem ersten Rad (3) oder der ersten Raupenkette (4) und dem zweiten Rad (3') oder der zweiten Raupenkette (4') angebracht ist, wobei der Sitz (7) vorzugsweise am inneren Boden des Aufbaus (1) befestigt ist.

3. Fahrzeug nach Anspruch 1 oder Anspruch 2, wobei der erste Motor und der zweite Motor an der Unterseite des Körpers (1) in der hinteren Hälfte des Fahrzeugs angebracht sind.

4. Fahrzeug nach einem der Ansprüche 1 bis 3, wobei der erste Motor und der zweite Motor Elektromotoren sind, wobei die Elektromotoren von mindestens einer Batterie (9) gespeist werden, die sich am Boden, vorzugsweise unter dem Sitz (7), des Fahrzeugs befindet, wobei der erste und der zweite Elektromotor im ersten und zweiten Rad (3, 3') bzw. in der ersten und zweiten Raupenkette (4, 4') angeordnet sind.

5. Fahrzeug nach Anspruch 4, wobei die mindestens eine Batterie (9) durch Rekuperation aus dem ersten Rad (3) oder der Raupenkette (4) und/oder dem zweiten Rad (3') oder der Raupenkette (4') durch Abbremsen des Fahrzeugs aufladbar ist.

6. Fahrzeug nach einem der Ansprüche 1 bis 5, **gekennzeichnet durch** ein Aufhängungssystem (32) für die Räder oder Raupenketten (3, 3'; 4, 4'), wobei das Aufhängungssystem (32) eine vertikale Bewegung der Räder oder Raupenketten (3, 3'; 4, 4') ermöglicht.

7. Fahrzeug nach einem der Ansprüche 1 bis 6, wobei das erste Rad (3) oder die erste Raupenkette (4) und das zweite Rad (3') oder die zweite Raupenkette (4') auf jeder Seite des Fahrzeugs unabhängig voneinander angehoben oder abgesenkt werden können, wobei die gesamte Gleitfläche (2) des Fahrzeugs in Kontakt mit dem Boden steht, wenn das erste und das zweite Rad (3, 3') oder die erste Raupenkette (4, 4') vom Boden abgehoben sind.

8. Fahrzeug nach Anspruch 7, wobei das erste Rad (3) bzw. die erste Raupenkette (4) und das zweite Rad (3') bzw. die zweite Raupenkette (4') an jeder Fahrzeugseite mechanisch, vorzugsweise über eine mechanische Radaufhängung (11), mit Steuerhebeln (33') anhebbar oder absenkbar sind.

9. Fahrzeug nach Anspruch 7, wobei das erste Rad (3) oder die erste Kette (4) und das zweite Rad (3') oder die zweite Raupenkette (4') auf jeder Seite des Fahrzeugs über eine Radaufhängung (12) mit Steuerhebeln (33') elektrisch angehoben oder abgesenkt werden können.

10. Fahrzeug nach einem der Ansprüche 1 bis 9, **dadurch gekennzeichnet, dass** mindestens die Hälfte der Gleitfläche (2) die Fahrbahn berührt, wenn die Räder (3, 3') oder Raupenketten (4, 4') abgesenkt sind.

11. Fahrzeug nach einem der Ansprüche 1 bis 10, wobei die Gleitfläche (2) an der Fahrzeugfront nach oben gewölbt ist.

12. Fahrzeug nach einem der Ansprüche 1 bis 11, **gekennzeichnet durch** eine Computersteuerung (8), wobei die Computersteuerung (8) die mindestens eine Batterie (9) der Elektromotoren steuert und den Ladezustand der Batterie und die Entfernung des Fahrzeugs zur nächsten Batterieladestation misst, wobei die Computersteuerung (8) vorzugsweise GPS-Koordinaten enthält.

## Revendications

1. Un véhicule motorisé pour la neige ou la glace comprenant
• un corps (1),
• une surface de glissement au fond (2) dudit corps (1),
• une première roue (3) ou une piste sans fin (4) d'un côté du véhicule et une deuxième roue (3') ou une piste sans fin (4') du côté opposé du véhicule, toutes deux fixées à l'extérieur de la corps (1), et
• un siège (7),
dans lequel
un premier moteur est fixé sur un côté du corps (1) et un second moteur est fixé sur le côté opposé du corps (1), le premier moteur étant relié à la première roue (3) ou à la piste sans fin (4) et le second moteur étant relié à la seconde roue (3') ou à la piste sans fin (4'),
dans lequel le véhicule comprend en outre une première commande d'accélérateur (33) pour le premier moteur et une deuxième commande d'accélérateur (33) pour le deuxième moteur, la première commande d'accélérateur (33) et la deuxième commande d'accélérateur (33) fonctionnant indépendamment l'une de l'autre, **caractérisé par le fait que** les roues (3, 3') ou les chenilles sans fin (4, 4') sont fixées à la corps (1) à l'arrière du véhicule et que la surface de glissement au bas (2) de la corps (1) se trouve à l'avant du véhicule, la totalité de la surface de glissement (2) du véhicule se trouvant au bas (2) de ladite corps (1) et étant formée par ladite corps (1) de sorte que la surface de glissement (2) soit toujours en contact avec le sol.

2. Véhicule selon la revendication 1, **caractérisé par le fait que** le siège (7) est monté entre la première roue (3) ou la piste sans fin (4) et la deuxième roue (3') ou la piste sans fin (4'), le siège (7) étant de préférence fixé au fond intérieur du corps (1).

3. Véhicule selon la revendication 1 ou la revendication 2, dans lequel le premier moteur et le second moteur sont fixés au bas de la corps (1) dans la moitié arrière du véhicule.

4. Véhicule selon l'une des revendications 1 à 3, dans lequel le premier moteur et le second moteur sont des moteurs électriques, dans lequel les moteurs électriques sont alimentés par au moins une batterie (9), qui est située au fond, de préférence sous le siège (7), du véhicule, dans lequel le premier et le second moteur électrique sont disposés dans la première et la seconde roue (3, 3') ou dans la première et la seconde piste sans fin (4, 4'), respectivement.

5. Véhicule selon la revendication 4, dans lequel au moins une batterie (9) peut être chargée par récupération de la première roue (3) ou de la piste sans fin (4) et/ou de la deuxième roue (3') ou de la piste sans fin (4') en freinant le véhicule.

6. Véhicule selon l'une des revendications 1 à 5, **caractérisé par** un système de suspension (32) pour les roues ou les chenilles sans fin (3, 3'; 4, 4'), dans lequel le système de suspension (32) permet un mouvement vertical des roues ou des chenilles sans fin (3, 3'; 4, 4').

7. Véhicule selon l'une des revendications 1 à 6, dans lequel la première roue (3) ou la piste sans fin (4) et la deuxième roue (3') ou la piste sans fin (4') de chaque côté du véhicule peuvent être levées ou abaissées indépendamment l'une de l'autre, dans lequel toute la surface de glissement (2) du véhicule est en contact avec le sol lorsque la première et la deuxième roue (3, 3') ou la piste sans fin (4, 4') sont soulevées du sol.

8. Véhicule selon la revendication 7, dans lequel la première roue (3) ou la pistes sans fin (4) et la deuxième roue (3') ou la voie sans fin (4') de chaque côté du véhicule peuvent être levées ou abaissées mécaniquement, de préférence par l'intermédiaire d'une suspension de roue mécanique (11), à l'aide de leviers de commande (33').

9. Véhicule selon la revendication 7, dans lequel la première roue (3) ou la pistes sans fin (4) et la deuxième roue (3') ou la voie sans fin (4') de chaque côté du véhicule peuvent être soulevées ou abaissées électriquement par l'intermédiaire d'une suspension de roue (12), avec des leviers de commande (33').

10. Véhicule selon l'une des revendications 1 à 9, **caractérisé par le fait qu'**au moins la moitié de la surface de glissement (2) touche la surface sur laquelle le véhicule se déplace lorsque les roues (3, 3') ou les chenilles sans fin (4, 4') sont abaissées.

11. Véhicule selon l'une des revendications 1 à 10, dans lequel la surface de glissement (2) est incurvée vers le haut à l'avant du véhicule.

12. Véhicule selon l'une des revendications 1 à 11, **caractérisé par** un contrôleur informatique (8), dans lequel le contrôleur informatique (8) contrôle au moins une batterie (9) des moteurs électriques et mesure la charge de la batterie et la distance du véhicule jusqu'à la prochaine station de charge de la batterie, le contrôleur informatique (8) contenant de préférence des coordonnées GPS.
